# EUROPÄISCHE PATENTANMELDUNG

(11) **EP 1 093 982 A1**
(43) Veröffentlichungstag der Anmeldung: **25.04.2001**
(21) Anmeldenummer: 99810962.3
(22) Anmeldetag: 22.10.1999
(51) Int. Cl.: B60R 22/48

(54) **Verfahren zur Überwachung der Sicherheitsgurtbenutzung und Anordnung zur Durchführung des Verfahrens**

(71) Anmelder: Ascom Systec AG, 5506 Mägenwil (CH)
(72) Erfinder: Glaeser, Axel, 5406 Baden-Rütihof (CH)
(74) Vertreter: Roshardt, Werner Alfred, Dipl.-Phys.

(57) **Zusammenfassung**

Bei einem Verfahren zur Überwachung der Benutzung eines Sicherheitsgurtes in einem Fahrzeug wird von ausserhalb des Fahrzeuges her automatisch festgestellt, ob ein Fahrzeuginsasse den Sicherheitsgurt angelegt hat oder nicht. Dadurch wird die Motivation zum Tragen des Sicherheitsgurtes erhöht.

## Beschreibung

### Technisches Gebiet

Die Erfindung betrifft ein Verfahren zur Überwachung der Benutzung eines Sicherheitsgurtes in einem Fahrzeug und eine Anordnung zur Durchführung des Verfahrens.

### Stand der Technik

Obwohl es allgemein bekannt ist, dass durch die Benutzung von Sicherheitsgurten in Fahrzeugen (insbesondere Automobilen) das Verletzungsrisiko im Falle eines Unfalls erheblich vermindert werden kann, werden nach wie vor häufig in Fahrzeugen installierte Sicherheitsgurten durch die Passagiere und/oder die Fahrzeugführer nicht benutzt. Dies geschieht zum Teil, weil das Anlegen der Sicherheitsgurten einfach vergessen wird, zum Teil aus Gründen der Bequemlichkeit und zum Teil aus anderen Gründen.

Heutzutage sind die meisten neuen Automobile mit Warnsystemen ausgerüstet, die Sicherheitsgurt-Sensoren umfassen um festzustellen, ob die Fahrzeuginsassen ihre Gurte korrekt angeschnallt haben oder nicht, sowie Anzeigemittel, welche akustisch und/oder optisch anzeigen, wenn ein Fahrzeuginsasse nicht korrekt angeschnallt ist. Dadurch kann die Gefahr eines ungewollten Vergessens des Anschnallens verhindert werden. Trotzdem gibt es immer noch eine beträchtliche Anzahl von Fahrzeuginsassen, die sich - aus welchen Gründen auch immer - während der Fahrt in einem Automobil nicht anschnallen und sich somit einem erhöhten Verletzungsrisiko aussetzen, wie aufgrund von Unfallstatistiken eindeutig nachgewiesen werden kann.

Um die Motivation zum Tragen von Sicherheitsgurten zu erhöhen, wird in der amerikanischen Patentanmeldung US-A-4 849 733 (Conigliaro) vorgeschlagen, das Sicherheitsgurt-Warnsystem zusätzlich mit einem Anzeigelicht an der Aussenseite des Automobils zu versehen, welches aufleuchtet, wenn ein Fahrzeuginsasse den Sicherheitsgurt nicht trägt. Dadurch können Polizisten im Zuge von Verkehrskontrollen anhand solcher Anzeigelichter nicht angeschnallte Fahrzeuginsassen erkennen und büssen.

Aus der Druckschrift US-A-5 877 707 (Kowalick) ist ein Sicherheitsgurt-Warnsystem bekannt, das nebst den Sicherheitsgurt-Sensoren weiter einen GPS-Empfänger umfasst. Während der Fahrt werden laufend Daten über die Position des Automobils (die durch den GPS-Empfänger bestimmt wird), die Fahrgeschwindigkeit, das Tragen/Nicht-Tragen der Sicherheitsgurten usw. in einer sog. Blackbox gespeichert, wie sie ähnlich zum Speichern von Daten bei Flugzeugen schon lange bekannt ist. Nach einem Unfall können diese Daten dann z.B. von der Polizei oder von einem Versicherungsexperten ausgewertet werden. Anschliessend kann die Auszahlung von Versicherungsleistungen gekürzt werden, wenn zum Zeitpunkt des Unfalls kein Sicherheitsgurt getragen wurde.

Noch einen Schritt weiter geht die Druckschrift FR-A-2 649 517 (Sorge). Gemäss dieser französischen Patentanmeldung werden das Nicht-Tragen eines Sicherheitsgurtes und andere Verkehrssünden wie z.B. Geschwindigkeitsübertretungen automatisch von einem in einem Fahrzeug installierten Überwachungssystem erkannt und die entsprechenden Daten auf einer Magnetkarte gespeichert. Das auf der Magnetkarte gespeicherte Sündenregister kann nur gelöscht werden, indem die Magnetkarte in einen externen Bussenautomaten eingeführt und die für die Verkehrssünden vorgesehenen Bussen bezahlt werden. Solange auf der Magnetkarte Verkehrssünden angezeigt werden, für die noch keine Busse bezahlt wurde, wird der Betrieb des Fahrzeuges durch das Überwachungssystem verhindert.

Sämtliche der oben genannten Sicherheitsgurt-Warnsysteme weisen den Nachteil auf, dass die Sensoren, Anzeige- und/oder Speichermittel, welche das Nicht-Tragen eines Sicherheitsgurtes detektieren, anzeigen und/oder registrieren, relativ einfach ausser Funktion gesetzt oder umgangen werden können, um gewünschtenfalls das Sicherheitsgurt-Warnsystem auszuschalten oder zu täuschen. Nach einer entsprechenden Manipulation des Sicherheitsgurt-Warnsystems entfällt natürlich die zusätzliche Motivation zur Benutzung eines Sicherheitsgurtes.

### Darstellung der Erfindung

Aufgabe der Erfindung ist es, ein Verfahren zur Überwachung der Benutzung eines Sicherheitsgurtes in einem Fahrzeug und eine Anordnung zur Durchführung des Verfahrens anzugeben, durch welche die Motivation zum Tragen des Sicherheitsgurtes erhöht wird.

Die Lösung der Aufgabe ist durch die Merkmale der unabhängigen Ansprüche definiert. Gemäss der Erfindung wird bei einem Verfahren zur Überwachung der Benutzung eines Sicherheitsgurtes in einem Fahrzeug von ausserhalb des Fahrzeuges her automatisch festgestellt, ob ein Fahrzeuginsasse den Sicherheitsgurt angelegt hat oder nicht.

Das Tragen bzw. Nicht-Tragen des Sicherheitsgurtes wird erfindungsgemäss von ausserhalb des Fahrzeuges her festgestellt. Im Vergleich zur herkömmlichen Sicherheitsgurtüberwachung, bei der das Tragen bzw. Nicht-Tragen des Sicherheitsgurtes vom Fahrzeuginnern her festgestellt wird, wird durch diese erfindungsgemässe Massnahme eine Manipulation der Sicherheitsgurtüberwachung zu Täuschungs- und/oder Umgehungszwecken erschwert oder sogar verunmöglicht. Dadurch wird die Motivation zum Tragen des Sicherheitsgurtes erhöht.

Das Tragen bzw. Nicht-Tragen des Sicherheitsgurtes wird erfindungsgemäss automatisch festgestellt. Eine automatische Sicherheitsgurtüberwachung bzw. Sicherheitsgurtkontrolle ist mit erheblich geringerem Personalaufwand verbunden und somit wesentlich kostengünstiger als die bisher übliche Sicherheitsgurtüberwachung im Zusammenhang mit Verkehrskontrollen, bei denen die einzelnen Fahrzeuge und Fahrzeuginsassen durch Polizisten überprüft werden. Deshalb können erfindungsgemässe Sicherheitsgurtüberwachungen wesentlich häufiger durchgeführt werden als konventionelle, durch Polizisten vorzunehmende Sicherheitsgurtüberwachungen. Dadurch wird die Motivation zum Tragen von Sicherheitsgurten weiter erhöht.

Gemäss einer bevorzugten Ausführungsart der Erfindung umfasst das Sicherheitsgurtbenutzungsüberwachungsverfahren einen Schritt der Vorklassierung, in welchem der Fahrzeugtyp des überwachten Fahrzeuges bestimmt wird. Nach der Durchführung dieser Vorklassierung wird anhand von für diesen Fahrzeugtyp bekannten Sicherheitsgurtmerkmalen festgestellt, ob ein Fahrzeuginsasse den Sicherheitsgurt angelegt hat oder nicht.

Vorzugsweise werden im Zuge der Durchführung des erfindungsgemässen Sicherheitsgurtbenutzungsüberwachungsverfahrens von einem überwachten Fahrzeug automatisch ein oder mehrere Bilder aufgenommen, wonach mittels automatischer Bildauswertungsverfahren anhand des einen oder der mehreren Bilder festgestellt wird, ob ein Fahrzeuginsasse den Sicherheitsgurt angelegt hat oder nicht.

Zum Feststellen, ob ein Fahrzeuginsasse den Sicherheitsgurt angelegt hat oder nicht, können z.B. das eine oder die mehreren Bilder mit einer Vielzahl von gespeicherten Bilderpaaren verglichen werden, wobei ein Bilderpaar jeweils eine Abbildung eines Fahrzeuges mit einem Fahrzeuginsassen mit angelegtem Sicherheitsgurt und eine Abbildung des gleichen Fahrzeuges mit dem gleichen Fahrzeuginsassen ohne angelegtem Sicherheitsgurt umfasst.

Selbstverständlich können die für den Bildvergleich vorgesehenen Bilderpaare vor ihrer Speicherung in einen geeigneten Merkmalsraum transformiert und anschliessend die transformierten Bilderpaare gespeichert werden. In diesem Fall werden das eine oder die mehreren der vom überwachten Fahrzeug aufgenommenen Bilder zunächst in den gleichen Merkmalsraum transformiert, worauf der Bildvergleich zwischen dem einen oder den mehreren Bildern und den gespeicherten Bilderpaaren in diesem Merkmalsraum durchgeführt wird. Durch die Transformation in einen geeigneten Merkmalsraum, der vorzugsweise eine geringere Dimension aufweist als der die ursprünglichen Pixelbilder umfassende Bildraum, können der Rechenaufwand zur Durchführung des Bildvergleichs sowie der zur Speicherung der Bilder erforderliche Speicherplatz erheblich vermindert werden. Zudem können durch die Transformation in den Merkmalsraum auch die Trefferhäufigkeit des Bildvergleichs erhöht und die zur Durchführung des Bildvergleichs erforderliche Rechenzeit vermindert werden.

Eine Überwachungsanordnung zur Durchführung des erfindungsgemässen Sicherheitsgurtbenutzungsüberwachungsverfahrens umfasst Detektionsmittel, die ausgebildet sind, um von ausserhalb eines mit wenigstens einem Sicherheitsgurt ausgerüsteten Fahrzeuges her automatisch festzustellen, ob ein Fahrzeuginsasse den Sicherheitsgurt angelegt hat oder nicht. Vorzugsweise umfassen die Detektionsmittel ein Bildaufnahmegerät zum Aufnehmen wenigstens eines Bildes des Fahrzeuges.

Gemäss einer Variante der Erfindung ist die Überwachungsanordnung zur Durchführung des erfindungsgemässen Sicherheitsgurtbenutzungsüberwachungsverfahrens weiter mit Mitteln zum automatischen Empfangen eines Signals versehen, das von einer im Fahrzeug installierten Sendervorrichtung ausgesendet wird und angibt, ob ein Fahrzeuginsasse den Sicherheitsgurt angelegt hat oder nicht. Vorzugsweise wird zu diesem Zweck vom Fahrzeug aus ein Funksignal ausgesendet und umfassen die Empfangsmittel der Überwachungsanordnung einen zum Empfangen dieses Funksignals ausgebildeten Funkempfänger.

Ein Sicherheitsgurt, der besonders zur Durchführung eines erfindungsgemässen Sicherheitsgurtbenutzungsüberwachungsverfahrens geeignet ist, das die Schritte umfasst, von ausserhalb eines Fahrzeuges her automatisch ein oder mehrere Bilder vom Fahrzeug aufzunehmen und danach mittels automatischem Bildauswertungsverfahren anhand des einen oder der mehreren Bilder festzustellen, ob ein Fahrzeuginsasse einen Sicherheitsgurt angelegt hat oder nicht, zeichnet sich dadurch aus, dass er mit optisch reflektierenden Mitteln versehen ist. Die optisch reflektierenden Mittel dienen zur besseren Erkennung des Sicherheitsgurtes auf dem Bild. Je nach Typ der zur Bildaufnahme verwendeten Bildaufnahmegeräte und/oder Filme können die reflektierenden Mittel im ultravioletten, sichtbaren und/oder infraroten Bereich des Spektrums der elektromagnetischen Wellen reflektierend sein.

Ein in einem Fahrzeug, insbesondere einem Auto, installierbares Sicherheitsgurt-Warnsystem mit einem Sensor zum Feststellen, ob ein Fahrzeuginsasse einen Sicherheitsgurt angelegt hat oder nicht, kann zur Unterstützung des erfindungsgemässen Sicherheitsgurtbenutzungsüberwachungsverfahrens weiter Mittel zum automatischen Aussenden eines Signals umfassen, welches in Abhängigkeit des Sensorergebnisses angibt, ob ein Fahrzeuginsasse einen Sicherheitsgurt angelegt hat oder nicht. Dieses Signal kann dann von einer mit einem entsprechenden Empfänger versehenen erfindungsgemässen Überwachungsanordnung empfangen werden. Vorteilhafterweise ermittelt der Sensor zunächst, ob ein Fahrzeuginsasse einen Sicherheitsgurt angelegt hat oder nicht, und gibt dann in Abhängigkeit des Ermittlungsergebnisses ein elektrisches Signal an einen Sender weiter. Dieser sendet darauf in Abhängigkeit des elektrischen Signals ein Funksignal aus. Gemäss einer bevorzugten Ausführungsart der Erfindung wird im Falle eines in einem Auto installierten entsprechenden Sicherheitsgurt-Warnsystems dieses Funksignal über eine Antenne eines Autoradios oder eines Autotelefons ausgesendet. Dadurch kann die Installation einer zusätzlichen, speziell für das Sicherheitsgurt-Warnsystem vorgesehenen Funkantenne vermieden werden.

In der nachfolgenden detaillierten Beschreibung wird die Erfindung anhand von Ausführungsbeispielen erläutert, ohne dass dafür Zeichnungen erforderlich wären.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnung

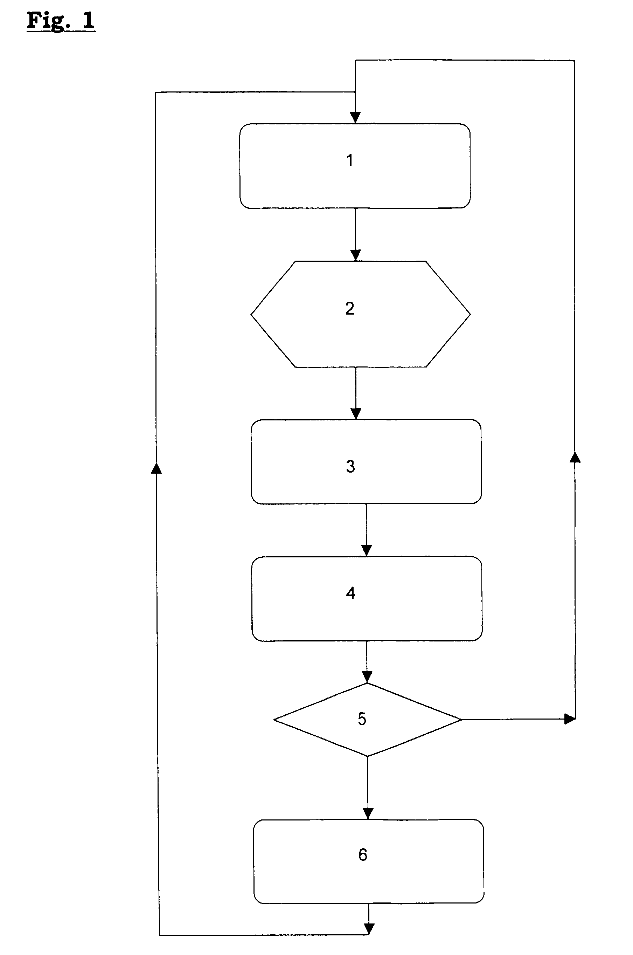

Die einzige zur Erläuterung des Ausführungsbeispiels verwendete Zeichnung Fig. 1 zeigt in vereinfachter, schematischer Form ein Ablaufdiagramm des Verfahrens gemäss einer bevorzugten Ausführungsart der Erfindung.

### Wege zur Ausführung der Erfindung

Eine Anordnung zur Überwachung der Sicherheitsgurtbenutzung gemäss einer bevorzugten Ausführungsart der Erfindung umfasst eine gebräuchliche Fahrzeugdetektionsvorrichtung, welche die Vorbeifahrt von Strassenfahrzeugen, insbesondere Automobilen, über einen vordefinierten Strassenabschnitt detektiert. Solche Fahrzeugdetektionsvorrichtungen sind bekannt und werden z.B. zur automatischen Überwachung des Verkehrs im Bereich von Verkehrsampeln eingesetzt.

Die Sicherheitsgurtbenutzungsüberwachungsanordnung umfasst weiter ein digitales Bildaufnahmegerät in Form einer sogenannten CCD-Kamera, welche Bilder aufnehmen und in digitaler Form speichern kann, sowie ein Bildverarbeitungssystem, das mit Steuerungsprogrammen für eine automatische Bildverarbeitung und/oder Bildauswertung versehen ist.

Sobald ein Fahrzeug über den vordefinierten Strassenabschnitt fährt, wird es von der Fahrzeugdetektionsvorrichtung detektiert. Über eine Signalleitung sendet diese ein Signal an die CCD-Kamera, welche auf den vordefinierten Strassenabschnitt gerichtet ist.

In einem ersten Schritt 1 des in Fig. 1 dargestellten Verfahrens nimmt die CCD-Kamera aufgrund des von der Fahrzeugdetektionsvorrichtung erhaltenen Signals ein oder mehrere Bilder von dem über den vordefinierten Strassenabschnitt fahrenden Fahrzeug auf und übermittelt das eine oder die mehreren von der CCD-Kamera aufgenommenen Bilder in digitaler Form automatisch über eine Datenleitung an das Bildverarbeitungssystem, von dem die Bilder nachfolgend automatisch in mehreren Schritten verarbeitet und ausgewertet werden.

In einem zweiten Schritt 2 (auch als Vorklassierung bezeichnet) wird danach zunächst der Fahrzeugtyp des überwachten Fahrzeuges bestimmt. Dazu wird auf dem oder den von der CCD-Kamera aufgenommenen Bildern nach einer Vielzahl von Merkmalen gesucht, die für bestimmte Fahrzeugtypen charakteristisch sind. Solche Merkmale sind z.B. die Aussenform des Fahrzeuges, die Formen und Anordnungen von Lampen, Türen, Aussenrückspiegeln, Kühlergrill, Dachträger, Reserverad und anderen von aussen erkennbaren Fahrzeugkomponenten, oder auch auf dem Fahrzeug angebrachte Kennzeichen von Fahrzeugmarken und/oder Typenbezeichnungen.

Das in Fig. 1 schematisch dargestellte und in der vorliegenden detaillierten Beschreibung beschriebene Ausführungsbeispiel der Erfindung ist auf die Sicherheitsgurtbenutzungsüberwachung von Fahrzeugführern beschränkt. Bei anderen Varianten der Erfindung werden zusätzlich zum Fahrzeugführer auch die Fahrzeugpassagiere auf die Benutzung von Sicherheitsgurten überwacht. Bei diesen Varianten umfasst das Sicherheitsgurtbenutzungsüberwachungsverfahren einen zusätzlichen Schritt, in welchem die Anwesenheit von Passagieren auf den Passagiersitzen im Fahrzeug festgestellt wird.

Nach der Durchführung der Vorklassierung 2, d.h., nach der Bestimmung des Fahrzeugtyps des von der CCD-Kamera aufgenommenen Fahrzeuges, werden in einem dritten Schritt 3 anhand von in einer Datenbank gespeicherten Daten relevante Merkmale von Sicherheitsgurten festgelegt, mit denen Fahrzeuge des entsprechenden Fahrzeugtyps ausgerüstet sind. Unter diesen relevanten Sicherheitsgurtmerkmalen sind diejenigen zu verstehen, die für die Feststellung, ob ein Sicherheitsgurt getragen wird oder nicht, relevant sind. Dabei können einige relevante Merkmale das Tragen des Sicherheitsgurtes anzeigen und andere das Nicht-Tragen des Sicherheitsgurtes. Ein relevantes Sicherheitsgurtmerkmal kann beispielsweise daraus bestehen, dass in einer Frontalaufnahme auf einem einen Personensitz umfassenden Bildausschnitt ein diagonaler, von rechts oben nach links unten verlaufender Streifen erkennbar ist. Beim Auffinden dieses Merkmals wird in einem späteren Schritt 5 auf das Tragen des entsprechenden Sicherheitsgurtes geschlossen.

In einem nächsten Schritt 4 wird in dem oder den von der CCD-Kamera aufgenommenen Bildern nach den für den bestimmten Fahrzeugtyp festgelegten relevanten Sicherheitsgurtmerkmalen gesucht, wobei im Falle des in der vorliegenden detaillierten Beschreibung beschriebenen Ausführungsbeispiels der Erfindung, das auf die Sicherheitsgurtbenutzungsüberwachung von Fahrzeugführern beschränkt ist, die Suche auf den oder die den Führersitz enthaltenden Bildbereiche beschränkt werden kann. Zum Feststellen, ob ein relevantes Sicherheitsgurtmerkmal erkennbar ist aufgrund dessen geschlossen werden kann, ob der Fahrzeugführer den Sicherheitsgurt angelegt hat oder nicht, werden das oder die von der CCD-Kamera aufgenommenen Bilder mit einer Vielzahl von gespeicherten Bilderpaaren verglichen, wobei ein Bilderpaar jeweils eine Abbildung eines Fahrzeuges mit einem Fahrzeugführer mit angelegtem Sicherheitsgurt und eine Abbildung des gleichen Fahrzeuges mit dem gleichen Fahrzeugführer ohne angelegtem Sicherheitsgurt umfasst.

Anschliessend wird in einem weiteren Schritt 5 des Verfahrens in Abhängigkeit der gefundenen bzw. der nicht gefundenen relevanten Sicherheitsgurtmerkmale festgestellt bzw. entschieden, ob der Fahrzeugführer des von der CCD-Kamera aufgenommenen Fahrzeuges den Sicherheitsgurt angelegt hat oder nicht.

Falls im Entscheidungsschritt 5 festgestellt wird, dass der Fahrzeugführer den Sicherheitsgurt angelegt hat, wird die CCD-Kamera in Bereitschaftsstellung zurück gebracht und beim nächsten Signal der Fahrzeugdetektionsvorrichtung wiederum mit dem ersten Schritt 1 des Verfahrens begonnen.

Andernfalls wird in einem zusätzlichen Schritt 6 in dem oder den von der CCD-Kamera aufgenommenen Bildern mit Methoden der automatischen Bildauswertung das Kennzeichen auf den Fahrzeugkontrollschildern ermittelt und zusammen mit dem Datum und der Uhrzeit der Bildaufnahme gespeichert. Die gespeicherten Daten können nachfolgend zum Büssen des fehlbaren Fahrzeugführers verwendet werden. Anschliessend wird die CCD-Kamera in Bereitschaftsstellung zurück gebracht und beim nächsten Signal der Fahrzeugdetektionsvorrichtung erneut mit dem ersten Schritt 1 des Verfahrens begonnen.

Das ganze in der vorliegenden detaillierten Beschreibung beschriebene Verfahren der Sicherheitsgurtbenutzungsüberwachung von der Fahrzeugdetektion über die Bildaufnahme, die Bildverarbeitung bzw. Bildauswertung, die Entscheidung, ob ein Fahrzeugführer den Sicherheitsgurt angelegt hat oder nicht bis zur Ermittlung und Speicherung der Fahrzeugkennzeichen wird vollständig automatisch und quasi in Echtzeit (d.h. mit einer Zeitverzögerung von bloss einigen wenigen Sekunden) durchgeführt.

Die Information, ob der Fahrzeugführer den Sicherheitsgurt angelegt hat oder nicht, kann im Anschluss an die Durchführung des Sicherheitsgurtbenutzungsüberwachungsverfahrens für verschiedene Zwecke verwendet werden, so z.B. zum Erstellen von Statistiken über das Gurtentragen, zum Büssen und/oder zum Anzeigen von fehlbaren Fahrzeugführern usw.

Zusammenfassend ist festzustellen, dass durch die Erfindung ein Verfahren zur Überwachung der Benutzung eines Sicherheitsgurtes in einem Fahrzeug und eine Vorrichtung zur Durchführung des Verfahrens bereitgestellt werden, durch welche die Motivation zum Tragen des Sicherheitsgurtes erhöht wird.

## Patentansprüche

1. Verfahren zur Überwachung der Benutzung eines Sicherheitsgurtes in einem Fahrzeug, dadurch gekennzeichnet, dass von ausserhalb des Fahrzeuges her automatisch festgestellt wird (5), ob ein Fahrzeuginsasse den Sicherheitsgurt angelegt hat oder nicht.

2. Verfahren nach Anspruch 1, dadurch gekennzeichnet, dass in einem Vorklassierungsschritt (2) zunächst der Fahrzeugtyp des überwachten Fahrzeuges bestimmt wird, wonach anhand von für diesen Fahrzeugtyp bekannten Sicherheitsgurtmerkmalen festgestellt wird (5), ob ein Fahrzeuginsasse den Sicherheitsgurt angelegt hat oder nicht.

3. Verfahren nach Anspruch 1 oder 2, dadurch gekennzeichnet, dass vom überwachten Fahrzeug automatisch ein oder mehrere Bilder aufgenommen werden (1) und danach mittels automatischer Bildauswertungsverfahren anhand des einen oder der mehreren Bilder festgestellt wird (5), ob ein Fahrzeuginsasse den Sicherheitsgurt angelegt hat oder nicht.

4. Verfahren nach Anspruch 3, dadurch gekennzeichnet, dass zum Feststellen (5), ob ein Fahrzeuginsasse den Sicherheitsgurt angelegt hat oder nicht, das eine oder die mehreren Bilder mit einer Vielzahl von gespeicherten Bilderpaaren verglichen werden (4), wobei ein Bilderpaar jeweils eine Abbildung eines Fahrzeuges mit einem Fahrzeuginsassen mit angelegtem Sicherheitsgurt und eine Abbildung des gleichen Fahrzeuges mit dem gleichen Fahrzeuginsassen ohne angelegtem Sicherheitsgurt umfasst.

5. Verfahren nach Anspruch 4, dadurch gekennzeichnet, dass die für den Bildvergleich vorgesehenen Bilderpaare in einen Merkmalsraum transformiert und anschliessend die transformierten Bilderpaare gespeichert werden, und dass das eine oder die mehreren Bilder vor dem Bildvergleich in den gleichen Merkmalsraum transformiert werden, worauf der Bildvergleich zwischen dem einen oder den mehreren Bildern und den gespeicherten Bilderpaaren in diesem Merkmalsraum durchgeführt wird.

6. Überwachungsanordnung zur Durchführung des Verfahrens nach einem der Ansprüche 1 bis 5, dadurch gekennzeichnet, dass die Überwachungsanordnung Detektionsmittel umfasst die ausgebildet sind, um von ausserhalb eines mit wenigstens einem Sicherheitsgurt ausgerüsteten Fahrzeuges her automatisch festzustellen (5), ob ein Fahrzeuginsasse den Sicherheitsgurt angelegt hat oder nicht.

7. Überwachungsanordnung nach Anspruch 6, dadurch gekennzeichnet, dass die Detektionsmittel ein Bildaufnahmegerät zum Aufnehmen (1) wenigstens eines Bildes des Fahrzeuges umfassen.

8. Überwachungsanordnung nach Anspruch 6 oder 7, dadurch gekennzeichnet, dass sie weiter Mittel zum automatischen Empfangen eines Signals umfassen, das von einer im Fahrzeug installierten Sendervorrichtung ausgesendet wird und angibt, ob ein Fahrzeuginsasse den Sicherheitsgurt angelegt hat oder nicht.

9. Sicherheitsgurt, dadurch gekennzeichnet, dass er mit optisch reflektierenden Mitteln versehen ist, um die Durchführung eines Verfahrens zur Überwachung der Benutzung des Sicherheitsgurtes in einem Fahrzeug zu unterstützen, wobei dieses Verfahren die Schritte umfasst, von ausserhalb des Fahrzeuges her vom überwachten Fahrzeug automatisch ein oder mehrere Bilder aufzunehmen (1) und anschliessend mittels automatischer Bildauswertungsverfahren anhand des einen oder der mehreren Bilder festzustellen (5), ob ein Fahrzeuginsasse den Sicherheitsgurt angelegt hat oder nicht.

10. In einem Fahrzeug installierbares Sicherheitsgurt-Warnsystem mit einem Sensor zum Feststellen, ob ein Fahrzeuginsasse einen Sicherheitsgurt angelegt hat oder nicht, dadurch gekennzeichnet, dass das Sicherheitsgurt-Warnsystem weiter Mittel zum automatischen Aussenden eines Signals umfasst, welches in Abhängigkeit des Sensorergebnisses angibt, ob ein Fahrzeuginsasse einen Sicherheitsgurt angelegt hat oder nicht.

11. Sicherheitsgurt-Warnsystem nach Anspruch 10, dadurch gekennzeichnet, dass es Mittel umfasst, um das Signal in Form eines Funksignals über eine Antenne eines Autoradios oder eines Autotelefons auszusenden.
